**Europäisches Patentamt**

**European Patent Office**

**Office européen des brevets**

(19)

(11) Veröffentlichungsnummer: **0 088 279**
A1

# (12) EUROPÄISCHE PATENTANMELDUNG

(21) Anmeldenummer: **83101682.9**

(22) Anmeldetag: **22.02.83**

(51) Int. Cl.³: **A 01 D 53/06,** A 01 D 35/22

(30) Priorität: **04.03.82 DE 3207835**

(43) Veröffentlichungstag der Anmeldung: **14.09.83**
**Patentblatt 83/37**

(84) Benannte Vertragsstaaten: **AT BE CH IT LI NL SE**

(71) Anmelder: **Wolf-Geräte GmbH, Gregor-Wolf-Strasse**
**Postfach 860 und 880, D-5240 Betzdorf/Sieg (DE)**

(72) Erfinder: **Kolb, Walter, Martin-Luther-Strasse 51,**
**D-5240 Betzdorf/Sieg (DE)**

(74) Vertreter: **Koch, Günther, Dipl.-Ing. et al,**
**Kaufingerstrasse 8, D-8000 München 2 (DE)**

(54) **Sichelrasenmäher mit Heckauswurf.**

(57) Bei einem Sichelrasenmäher mit Heckklappe und Grasfangkorb ist dieser Grasfangkorb mit Haken an seinem oberen vorderen Rand konzentrisch zur Schwenkachse (2) der Schutzklappe (1) eingehängt, derart, daß er nach hinten ausschwenken und pendeln kann. Durch sein Eigengewicht wird er gegen einen Festanschlag in der normalen Arbeitsstellung gehalten. Bei abgenommenem Grasfangkorb weist die Schutzklappe schräg nach hinten und unten und läßt das Schnittgut aus der Heckauswurföffnung heraustreten und lenkt es nach unten ab.

- 1 -

## Sichelrasenmäher mit Heckauswurf

Die Erfindung bezieht sich auf einen Sichelrasenmäher mit Heckauswurf für das Schnittgut und mit
einer selbstschließenden Schutzklappe hierfür, die
mit ihrem oberen Rand über ein Gelenk am Mäherchassis angelenkt ist und bei am Chassis eingehängtem
Grasfangkorb in ausgeschwenkter Stellung eine Entleerungsöffnung des Fangkorbes abdeckt, der an dem
hinteren Chassisteil eingehängt ist, wobei die Schutzklappe an ihrer dem Gelenk entgegengesetzten Kante
eine am Hinterrand der Entleerungsöffnung des Fangkorbes angreifende Verriegelungsvorrichtung aufweist.

Ein solcher Rasenmäher ist aus der DE-A-2044 624 bekannt. Bei diesem bekannten Rasenmäher ist der Fangkorb mit Stiften in Haken eingehängt, die am Lenkgestänge des Rasenmähers angeordnet sind. Die Stifte
sind dabei am oberen Teil des Grasfangkorbes etwa
in der Mitte seiner Längserstreckung angeordnet, so
daß im eingehängten Zustand über die Verriegelung der
Deckelklappe eine in sich starre Verbindung zwischen
Mäher und Grasfangkorb hergestellt ist. Dies führt dazu, daß beim Fahren auf unebenem Gelände oder beim Anfahren oder Abfahren einer Böschung der Grasfangkorb am Boden aufsitzt und die Hinterräder vom Boden abgehoben werden, so daß das Gesamtgewicht des Mähers auf den Vorderrädern und dem Grasfangkorb lastet. Dadurch kann dieser Grasfangkorb bzw. können die die Belastung aufnehmenden Gelenke und Verriegelungsvorrichtungen leicht beschädigt werden.

Der Erfindung liegt die Aufgabe zugrunde, dieses Aufsitzen des Grasfangkorbes auch bei unebenem und geböschtem Gelände zu vermeiden, ohne das Volumen des Grasfangkorbes dadurch zu schmälern, daß dieser vom Boden nach oben versetzt und ein Abstand vorgesehen wird, der das Aufsitzen vermeiden würde.

Gemäß der Erfindung wird diese Aufgabe dadurch gelöst, daß die Einhängehaken des Grasfangkorbes an der Lenkachse der Schutzklappe derart einhängbar sind, daß der Fangkorb mit der mit ihm verriegelten Schutzklappe um diese Gelenkachse nach hinten frei ausschwenkbar und durch sein Eigengewicht gegen den Heckauswurf vorgespannt ist.

Dadurch, daß die Anlenkachse des Grasfangkorbes mit der Gelenkachse der Schutzklappe zusammenfällt wird erreicht, daß der Fangkorb mit der an ihm durch Verriegelung festgelegten Schutzklappe frei nach hinten ausgeschwenkt werden kann, wenn der Grasfangkorb im unebenen Gelände mit dem Boden in Berührung kommt.

Dadurch werden Beanspruchungen der Aufhängevorrichtung und des Grasfangkorbes vermieden bzw. verringert. Beim Abschwenken des Grasfangkorbes entstehen zwar seitlich sektorförmige Öffnungen, durch die möglicherweise ein kleiner Teil des Grases austreten kann, jedoch ist dies ein in Kauf zu nehmender geringer Nachteil, weil dieser sektorförmige Spalt gleich wieder geschlossen wird, wenn der Grasfangkorb durch sein Gewicht wieder an den Heckauswurf herangeführt wird.

Durch die Erfindung wird es weiter möglich, den Boden des Grasfangkorbes einerseits ziemlich weit nach hinten zu ziehen und andererseits in unmittelbarer Nähe der Abrollebene anzuordnen, was zur Folge hat, daß eine günstige Volumenausnutzung mit günstiger Grasführung gewährleistet ist, weil das Gras nicht weit nach oben geführt werden muß.

Es ist zwar durch die US-PS 40 15 406 bei einem gattungsmäßig anderen Rasenmäher, nämlich einem Aufsitzmäher mit pneumatischer Grasfördervorrichtung bekannt, einen Grasfangbehälter so einzuhängen, daß er unter seinem Eigengewicht dem Chassis des Mähers anliegt. Hier ist jedoch ein Ausschwenken nach hinten nicht möglich und es ist auch keine Abdeckklappe vorgesehen und der Grasfangkorb ist zudem noch in einem beträchtlichen Bodenabstand angeordnet, so daß das der Erfindung zugrunde liegende Problem des Aufsitzens des Grasfangkorbes in unebenem Gelände nicht besteht.

Es ist ferner durch die GB-PS 11 68 159 bereits bekannt, einen Grasfangsack mit Haken am Messerchassis festzulegen, die von oben her in entsprechende Stifte eingreifen, wobei auch eine Schutzklappe vorgesehen ist. Die Schwenkachse dieser Schutzklappe ist von der Anhängeachse des Grasfangkorbes jedoch distanziert angeordnet, so daß ein gemeinsames Ausschwenken des Fangkorbes nicht möglich ist. Dieses Ausschwenken wird aber auch noch dadurch verhindert, daß die Schutzklappe über ihre Anlenkachse hinaus verlängert ist und mit dieser Verlängerung dem Chassis anliegt, so daß ein Zurückschwingen in die Schließstellung nicht möglich ist. Um hierbei ein Aufsitzen des Fangkorbes in unebenem Gelände zu verhindern, ist der Boden des Fangkorbes in einem beträchtlichen Abstand zur Lauffläche angeordnet und sein Abstand von der Lauffläche vergrößert sich nach hinten, so daß auch hier das der Erfindung zugrunde liegende Problem nicht vorhanden ist.

Dadurch, daß gemäß Patentanspruch 2 die Schutzklappe bei abgenommenem Grasfangkorb durch einen Chassisanschlag in einer nach hinten und unten weisenden Schrägstellung im Abstand zum Heckauswurf gehalten ist, wird es möglich auch ohne Fangkorb zu arbeiten, da durch die so gebildete untere Öffnung das Schnittgut in Bahnen abgelegt werden kann.

Nachstehend wird ein Ausführungsbeispiel der Erfindung anhand der Zeichnung beschrieben. In der Zeichnung zeigen:

Figur 1 eine perspektivische Ansicht des hinteren Teils eines Sichelrasenmähers mit eingehängtem Grasfangkorb und

Figur 2 eine Seitenansicht zu Figur 1.

Der Rasenmäher weist einen aus der Zeichnung nicht ersichtlichen Heckauswurf in Gestalt einer Öffnung auf, die sich zwischen den hinteren Stirnflächen der Seitenwände bzw. der oberen Wand des Chassis 5 erstreckt. Diese Öffnung ist durch eine Schutzklappe 1 abdeckbar, die mit ihrem oberen Rand 4 über Scharniere 2 am Oberrand des Chassis 5 angelenkt ist. Diese Schutzklappe 1 erstreckt sich über die gesamte Breite des Chassis und deckt dadurch die Auswurföffnung sicher ab.

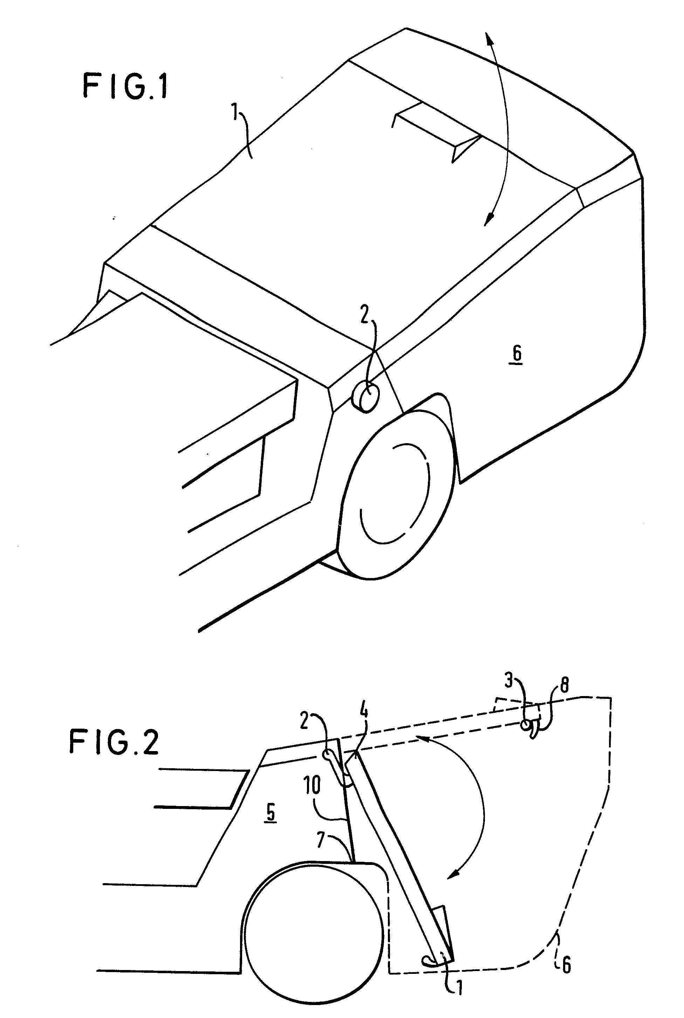

Wie aus Figur 2 ersichtlich, liegt die Schutzklappe 1 bei abgenommenem Grasfangkorb einem nicht dargestellten Anschlag unter ihrem Eigengewicht derart an, daß sie eine schräg nach hinten und unten weisende Stellung einnimmt. In dieser Stellung dient sie als Leitfläche für das aus der Auswurföffnung des Chassis austretende Schnittgut, so daß dieses Schnittgut in Bahnen gelegt wird.

Der Grasfangkorb 6 ist mittels nicht dargestellter Haken, die durch Chassisöffnungen eingreifen und am oberen Rand seitlich angeordnet sind, an der Schwenkachse 2 der Schutzklappe 1 eingehängt, wobei die Schutzklappe 1 über das Chassis zurückgeschlagen ist, und dann rastet die Klappe am Fangkorb mit einer Verriegelungsvorrichtung ein, die aus einer an der Hinterkante der Entleerungsöffnung des Fangkorbs 6 angeordneten Verriegelungsstange 3 und einer elastischen Riegelnase 8 besteht, die an dem dem Scharnier 2 gegenüberliegenden Hinterrand der Klappe angeordnet ist.

Der Fangkorb 6 ist zusammen mit der Schutzklappe 1 um die Gelenkachse 2 nach hinten ausschwenkbar, was eine Arbeitserleichterung darstellt, wenn beim Mähen über unebenes Gelände gefahren wird und die Unterseite des Fangkorbes mit dem Boden in Berührung kommt. Dann kann der Fangkorb 6 nach hinten ausschwenken, so daß die Hinterräder und damit auch die Messer nicht vom Boden abgehoben werden. In der aus den Figuren 1 und 2 ersichtlichen normalen Arbeitsstellung berühren sich die vorderen bzw. die hinteren Stirnflächen der Seitenwände vom Grasfangkorb 6 bzw. Chassis 5 längs des Randes 10, wodurch in dieser Stellung ein formschlüssiger Anschlag gebildet wird, gegen den der Grasfangkorb 6 unter seinem Eigengewicht anliegt.

Die in der Zeichnung nicht dargestellte Hakenausbildung der Einhängevorrichtung des Fangkorbs ist so gestaltet, daß ein Aushaken auch bei Berührung des Fangkorbs mit dem Boden nicht möglich ist, sondern ein Ausschwenken erfolgt, und zu diesem Zweck umgreifen die Haken die Welle in einem genügend großen Umfangswinkel.

Patentansprüche

1. Sichelrasenmäher mit Heckauswurf für das Schnittgut und mit einer selbstschließenden Schutzklappe hierfür, die mit ihrem oberen Rand über ein Gelenk am Mäherchassis angelenkt ist und bei am Chassis eingehängtem Grasfangkorb in ausgeschwenkter Stellung eine Entleerungsöffnung des Fangkorbes abdeckt, der an dem hinteren Chassisteil eingehängt ist, wobei die Schutzklappe an ihrer dem Gelenk entgegengesetzten Kante eine am Hinterrand der Entleerungsöffnung des Fangkorbes angreifende Verriegelungsvorrichtung aufweist, dadurch gekennzeichnet, daß die Einhängehaken des Grasfangkorbes (6) an der Gelenkachse (2) der Schutzklappe (1) derart einhängbar sind, daß der Fangkorb (6) mit der mit ihm verriegelten Schutzklappe (1) um diese Gelenkachse (2) nach hinten frei ausschwenkbar und durch das Eigengewicht gegen den Heckauswurf vorgespannt ist.

2. Sichelrasenmäher nach Anspruch 1, dadurch gekennzeichnet, daß die Schutzklappe (1) bei abgenommenem Grasfangkorb (6) durch einen Chassisanschlag in einer nach hinten und unten weisenden Schrägstellung im Abstand zum Heckauswurf gehalten ist.

FIG.1

FIG.2

## EINSCHLÄGIGE DOKUMENTE

EP 83101682.9

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | GB - A - 2 081 564 (SIAG S.P.A.) <br> * Seite 2, Zeilen 60-71; Fig. 1-4 * <br> -- | 1,2 | A 01 D 53/06 <br> A 01 D 35/22 |
| X | DD - A - 128 896 (SCHOELE) <br> * Fig. 3 * <br> -- | 1,2 | |
| P,X | EP - A1 - 0 047 415 (WOLF) <br> * Fig. 1,2 * <br> -- | 1,2 | |
| A | AU - B - 481 962 (DOUGLAS) <br> * Fig. 1-3 * <br> -- | | |
| A | US - A - 3 928 956 (BOYER) <br> * Fig. 1-5 * <br> -- | | RECHERCHIERTE SACHGEBIETE (Int. Cl. ³) |
| D,A | DE - A - 2 044 624 (VICTA LTD.) <br> * Fig. 1-3 * <br> ---- | | A 01 D 35/00 <br> A 01 D 53/00 |

Der vorliegende Recherchenbericht wurde für alle Patentansprüche erstellt.

| Recherchenort <br> WIEN | Abschlußdatum der Recherche <br> 11-05-1983 | Prüfer <br> LANGER |
|---|---|---|